# EUROPEAN PATENT SPECIFICATION

(11) **EP 2 189 067 B1**
(45) Date of publication and mention of the grant of the patent: **12.03.2014**
(21) Application number: 09176422.5
(22) Date of filing: 19.11.2009
(51) Int. Cl.: A23G 9/12, A23G 9/28

(54) **Machine for making and dispensing food products such as ice creams, ice cream shakes and the like**
Vorrichtung zur Herstellung und Dosierung von Nahrungamittelprodukten wie Speiseeis, Eis-Shakes und ähnliches
Appareil pour la fabrication et la distribution de produits alimentaires tels que crème glacée, crème frappée glacée et produits analogues

(30) Priority: 20.11.2008 IT BO20080704
(43) Date of publication of application: 26.05.2010
(73) Proprietor: Carpigiani Group - ALI S.p.A., 40011 Anzola Dell'Emilia (BO) (IT)
(72) Inventor: Cocchi, Gino, 40137 Bologna (IT); Zaniboni, Gianni, 40037 Borgonuovo di Sasso Marconi (Bologna) (IT); Lazzarini, Roberto, 42100 Reggio Emilia (IT)
(74) Representative: Bianciardi, Ezio

(56) References cited:
- EP-A1- 1 527 698
- EP-A1- 1 927 290
- EP-A2- 1 849 368
- EP-A2- 1 938 721
- WO-A1-88/01199
- WO-A1-2005/048730
- US-A- 4 974 965

## Description

This invention relates to a machine for making and dispensing food products such as ice creams, ice cream shakes and the like.

As is known, a machine for making and dispensing ice creams comprises a frame housing a tank for containing a basic product to be processed. The tank is connected, by a pump, to a freezing chamber containing a screw-shaped stirrer.

Also inside the frame, the machine is equipped with a refrigerating unit, comprising a compressor, a condenser and an evaporator connected to the freezing chamber. The front end of the freezing chamber is closed by a door, having a cylindrical mixing compartment made in it.

Inside the frame there is also an environment, preferably refrigerated, containing containers for flavouring syrups. Pipes, with pumps interposed between them, connect the flavouring syrup containers to the cylindrical mixing compartment.

A piston runs vertically inside the cylindrical compartment, with each outward stroke dispensing a dose of ice cream through a dispenser nozzle consisting of an opening made in a plate which closes the lower end of the cylindrical compartment.

In practice, for making ice cream, the screw-shaped stirrer remixes the product contained in the freezing chamber, simultaneously feeding it towards the front end. Before it is dispensed by the nozzle due to the piston thrust, the product present in the cylindrical mixing compartment is mixed with one or more flavouring syrups.

There are also prior art machines able to make and dispense both ice creams and ice cream shakes, which are much more liquid and creamy than ice creams.

A machine of said type usually differs from the machine described above due to the fact that it also comprises, in the frame, a tank for containing a diluting liquid (water or milk or a mixture of water and milk), which is also preferably refrigerated. A pipe connects the above-mentioned tank to the cylindrical mixing compartment with a pump interposed between them.

In this case, the product dispensed consists of ice cream or ice cream shake, depending whether or not the cylindrical mixing compartment is connected to the diluting liquid tank by suitable selecting means.

There are also prior art machines for making and dispensing "soft" ice cream, yogurt - ice cream, sorbets and desserts comprising one or more refrigerated upper tanks, for preserving the mixtures while standing by for their transformation into ice cream, said tanks feeding respective production or whipping and freezing cylinders by means of pumps which by pressurising the mixtures with air generate an ice cream end product with a big increase in volume. In the front part of the machines the cylinders are closed by a door with the lever taps for dispensing the ice cream, through which a portion of soft ice cream is dispensed. Additionally, machines such as those described by documents EP 1 927 290 A1 and WO 2005/048730 A1 are known.

The machines of the first type, only able to make ice cream, and those of the second type, which can also make ice cream shakes, and those of the third "soft" type, are often equipped with tanks or containers by the side, containing additional condiments, located close by the machine. Said additional condiments are usually candied items, sweets, chocolates, hazelnuts, pistachios, etc. Also close to the machine, in these cases there is a mixer, for example of the type described and illustrated in United States patent US 4946287.

Documents EP 1 938 721 A2, WO 88/01199 A1 and EP 1 527 698 A1 also disclose a known mixer.

Basically, having obtained the dispensed product, the consumer can enhance it as desired with the above-mentioned additional condiments, then goes to the mixer and having reached it mixes what was previously added to his ice cream or ice cream shake.

Very often, for various reasons, the position of the mixer is far from optimum. In some cases, the mixer is positioned too far away and its presence and function are not immediately obvious to the consumer. In other cases, the mixer is correctly positioned close to the dispensing machine, but in a position which is not very ergonomic.

Moreover, sometimes, during the short movement from the above-mentioned tanks to the mixer, the consumer accidentally drops on the floor part of the additional condiments, with obvious problems in terms of cleaning the premises.

This invention has for an aim to overcome the above-mentioned disadvantages.

Accordingly, this invention achieves said aim with a machine for making and dispensing food products such as ice creams, ice cream shakes and the like, which has the characteristics described in one or more of the appended claims.

The technical features of the invention, in accordance with the afore-mentioned aims, are clearly indicated in the claims herein and the advantages of the invention are more apparent in the detailed description which follows, with reference to the accompanying drawings, which illustrate a preferred embodiment by way of example only and without limiting the scope of the invention, in which:
- Figure 1 is a schematic perspective view of a "soft" type machine for dispensing food products such as soft ice creams, yogurt - ice cream, or sorbets and the like;
- Figure 2 is a schematic perspective view of another machine for making and dispensing food products and in particular ice creams, ice cream shakes and "soft" ice creams and the like, made in accordance with this invention;
- Figure 3 is a schematic perspective view of another type of machine for making and dispensing ice creams, ice cream shakes and the like, made in accordance with this invention;
- Figure 4 is a side view with some parts cut away to better illustrate others and some elements schematically illustrated with blocks, of the machine of Figure 3;
- Figure 5 is a front view, partly in cross-section, of a detail of the machine of Figure 1;
- Figure 6 is a plan view, with some parts cut away to better illustrate others, of the detail of Figure 3, in a first operating configuration;
- Figure 7 is a plan view, with some parts cut away to better illustrate others, of the detail of Figure 5, in a second operating configuration;
- Figures 8 and 9 are scaled down schematic perspective views of what is illustrated respectively in Figure 6 and in Figure 7;
- Figures 10 and 11 are respectively a front and a rear perspective view of a detail of Figures 1, 2 and 3, in particular a disposable spoon of a mixer integrated with the machines illustrated in Figures 1, 2 and 3;
- Figure 12 is a cross-section of a detail relative to the zone where the mixer rotary shaft is coupled with the disposable spoon;
- Figure 13 shows front, side and rear views of a different embodiment of the disposable spoon; and
- Figure 14 is a cross-section of a detail relative to the zone where the spoon of Figure 13 is coupled with the mixer rotary shaft.

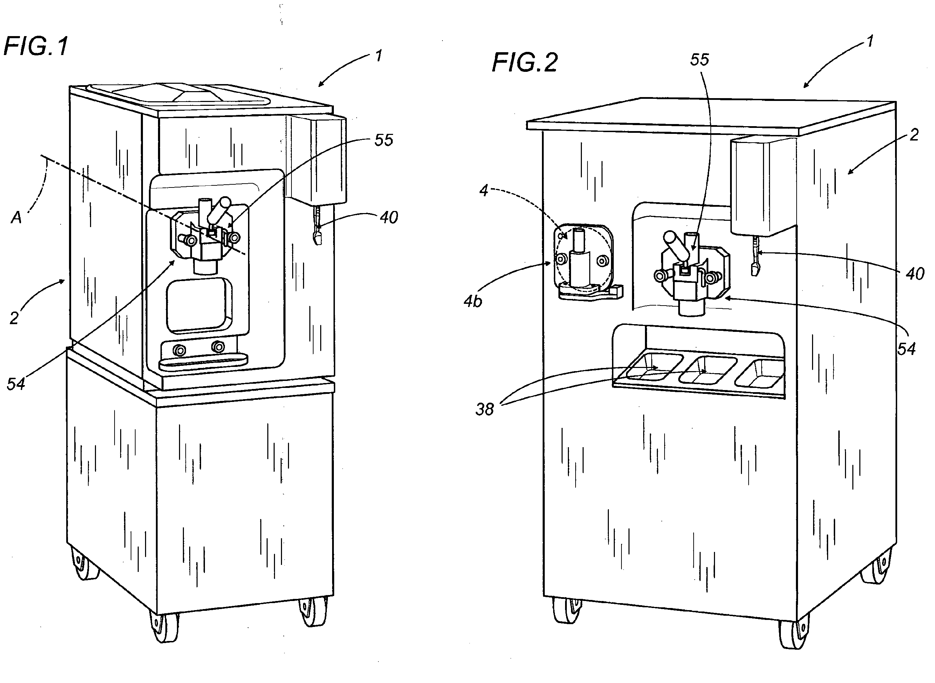

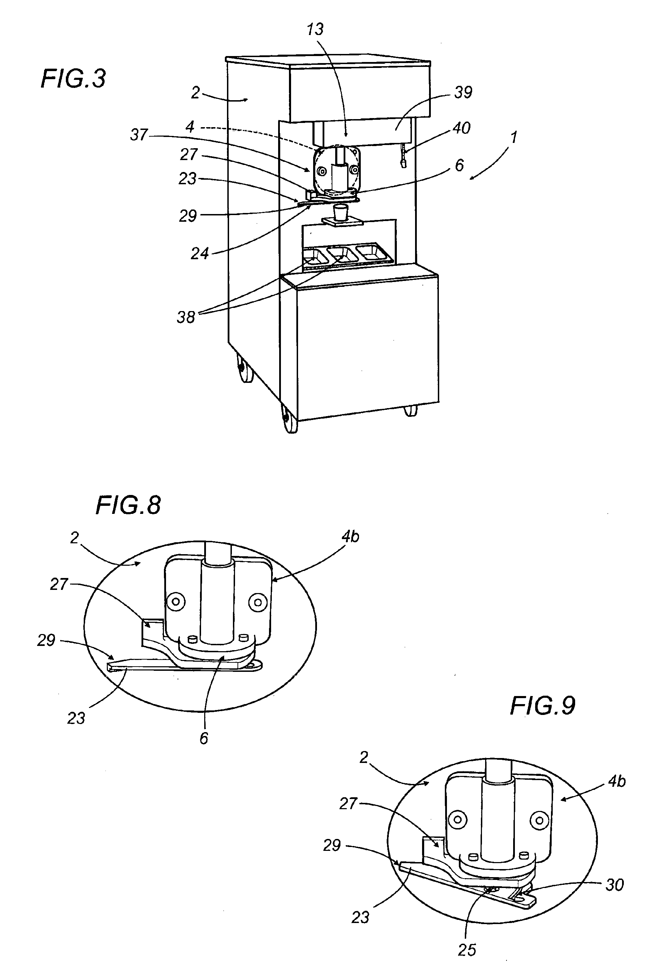

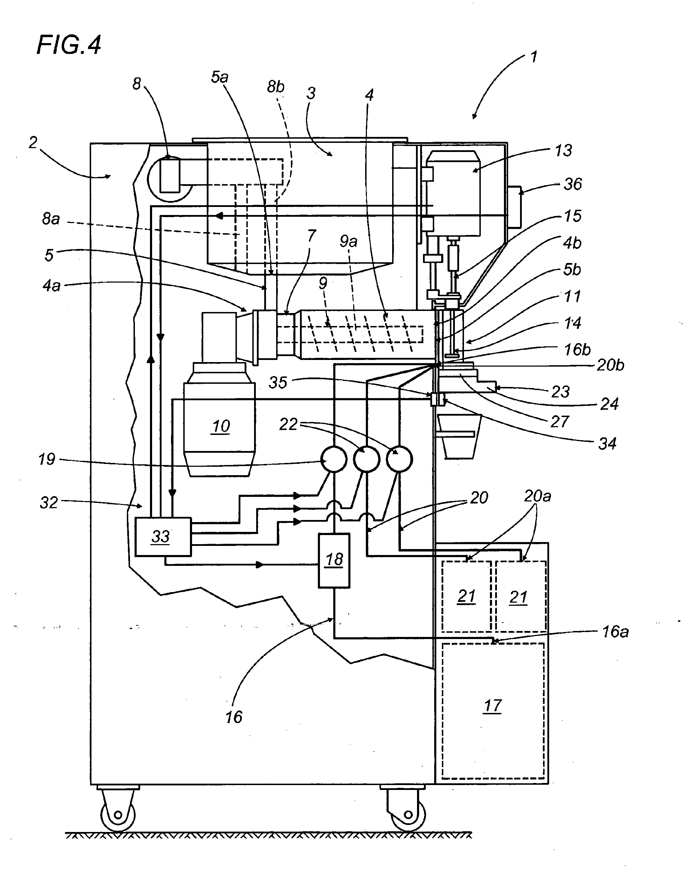

With reference to Figures 1, 2, 3 and 4, the numeral 1 denotes as a whole a "soft" type machine for dispensing food products such as soft ice creams, yogurt - ice cream, or sorbets and the like (Figure 1), a combined machine for making "soft" ice cream and for making two different types of product respectively consisting of ice creams, and ice cream shakes (Figure 2), and a machine for making two different types of product respectively consisting of ice creams and ice cream shakes (Figures 3 and 4).

The machines 1 comprises a substantially parallelepiped box-shaped frame 2 the top of which supports a tank 3 for containing a product to be processed, in the form of a liquid mixture, used as the basic component for obtaining ice creams or ice cream shakes.

As illustrated in particular in Figure 1, the soft type machine schematically illustrated comprises a refrigerated upper tank 3, for preserving the mixture while standing by for its transformation into ice cream. Housed at the centre of the machine, along a transversal axis A there is a production cylinder (not illustrated) equipped with a respective stirrer (not illustrated). By means of a respective pump (not illustrated), the tank 3 feeds the production or whipping and freezing cylinder. The pump pressurises the mixture with air in the whipping and freezing cylinder so that the cylinder generates an ice cream end product with a big increase in volume. In the front part of the machine 1 the cylinder is closed by a door 54 with a lever tap 55 forming dispensing means 13, for dispensing the ice cream, through which a portion of soft ice cream is dispensed.

As shown in Figure 1, the machine 1 also comprises, supported by the frame 2 in a single integrated structure, a mixer 39 equipped with a disposable spoon 40 for mixing additional condiments with the product dispensed.

It is important to notice that the mixer 39 is positioned immediately next to, specifically to the right of, the dispensing means 13 and that the tanks 38 are positioned immediately below the dispensing means 13 and the mixer 39.

According to embodiments which are not illustrated, the mixer 39 is positioned immediately to the left of the dispensing means 13.

The mixer 39 comprises an electric motor and a relative electronic control section of the known type and therefore not described in detail. The spoon 40 is described below with reference to Figures 8 to 10.

The spoon 40 has a central longitudinal axis A, is completely made of plastic and comprises, in a single body obtained by moulding, a shank 41, extending in the direction of the axis A and bearing, at a longitudinal end 42, blade-shaped mixing and scooping means 43.

At the opposite end to the blade-shaped mixing and scooping means 43, the spoon 40 can be fixed coaxially and removably to the vertical rotary shaft 44 of the mixer 39, in such a way that the consumer can subsequently use the spoon 40 as a utensil for consuming the product previously mixed. In particular, at the opposite end to the blade-shaped mixing and scooping means 43, the shank 41 is equipped with two end jaws 45, designed to removably engage with a free end portion 46 of the shaft 44.

Other features will be described in detail in the case of the other types of machines illustrated.

As illustrated in Figure 2, the only feature which changes relative to the machine of Figure 1 is that this machine is a combined machine equipped with a dispenser for soft ice cream and a dispenser for normal ice cream. Again in this case the machine comprises, supported by the frame 2 in a single integrated structure, a mixer 39 equipped with a disposable spoon 40 for mixing additional condiments with the product dispensed, whose technical features are the same as those described for the machine of Figure 1.

As shown in Figures 3 and 4, inside the frame 2 there also extends a main processing circuit 5 designed to make the ice cream, having an infeed end 5a connected to the tank 3 and an outfeed end 5b connected to a mixing chamber 6.

In particular, as illustrated in Figure 4, the main processing circuit 5 has a freezing chamber 4, and a refrigerating unit 7 schematically illustrated and consisting of a motor-driven compressor, a condenser and an evaporator (of the known type and therefore not described and illustrated in detail) connected to the freezing chamber 4.

The freezing chamber 4 and the mixing chamber 6 together form a processing chamber 37.

The freezing chamber 4 has a substantially cylindrical shape and forms a rear end 4a connected to the tank 3 and a front end 4b forming the above-mentioned outfeed end 5b of the main processing circuit 5.

The product to be processed is fed by a gear pump 8, positioned at the tank 3 and in communication with the latter with an intake pipe 8a for drawing the product from the tank 3 and sending it through a delivery pipe 8b to the rear end 4a of the freezing chamber 4.

Extending inside the freezing chamber 4 there is a stirrer 9 designed to feed forward the product to be processed from the rear end 4a to the front end 4b. The stirrer 9 consists of a screw feeder 9a driven to rotate about its own axis by respective movement means 10 such as a gear motor unit and able to push the product towards and into a dispenser tap 11 mounted on the front end 4b of the freezing chamber 4.

In particular, the dispenser tap 11 projects outside the frame 2 from a front wall of the frame 2 and inside forms the mixing chamber 6. The tap 11 also comprises an outfeed pipe 12 (Figure 3) through which the ice cream or ice cream shake fed into the mixing chamber 6 is made to come out by suitable dispensing means 13 of the known type and therefore not described and illustrated in detail.

The dispensing means 13 comprise a mixing element 14 rotatably inserted in the mixing chamber 6 to mix the product to be processed inserted in the chamber 6 as described in more detail below. The dispensing means 13 also comprise an actuator 15 able to move in the mixing chamber 6 to open and close holes for delivery of the ice cream or ice cream shake towards the outfeed pipe 12.

The actuator 15 is preferably a piston operated electronically or manually using suitable levers, which can be inserted in the mixing chamber 6.

The machine 1 in Figures 3 and 4 also comprises an auxiliary processing circuit 16 extending inside the box-shaped frame 2 and having an infeed end 16a connected to a tank 17 for containing a diluting liquid, and an outfeed end 16b connected to the mixing chamber 6.

In particular, the auxiliary processing circuit 16 is designed to supply to the mixing chamber 6 a diluting liquid such as water or milk, for making the ice cream shake. As illustrated in Figure 2, the auxiliary processing circuit 16 has a heating element 18 interposed between the tank 17 and the outfeed end 16b which is designed to heat the liquid supplied to the mixing chamber 6.

Advantageously, the tank 17 may be equipped with respective heating means not illustrated in the accompanying drawings and set up to keep the diluting liquid at a predetermined temperature.

The auxiliary processing circuit 16 also comprises a pump 19 interposed between the heating element 18 and the outfeed end 16b, for feeding the liquid from the tank 17 to the mixing chamber 6.

Advantageously, the machine 1 also comprises at least one circuit 20, also housed in the box-shaped frame 2, for feeding a flavouring syrup.

It should be noticed that Figure 4 illustrates by way of example and therefore without limiting the scope of the invention two feed circuits 20 for respective syrups intended to give the ice cream or ice cream shake made a specific flavour. However, there may be any number of syrup feed circuits 20, depending on the variety of flavours to be given to the products dispensed by the machine 1.

Each syrup feed circuit 20 has a respective infeed end 20a connected to a tank 21 for containing the syrup and an outfeed end 20b connected to the mixing chamber 6. The circuit 20 also comprises a syrup feed pump 22 for supplying the syrup to the mixing chamber 6 after a respective command, as described in more detail below.

The machine 1 also comprises means 23 for selecting the type of product, which can be switched between an ice cream dispensing condition and an ice cream shake dispensing condition.

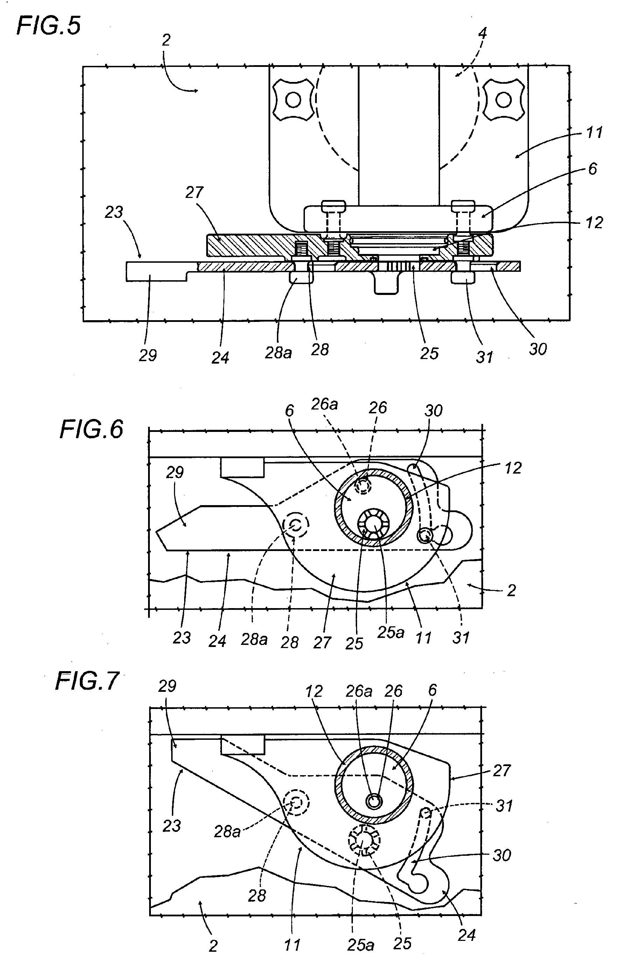

As illustrated in detail in Figures 6 and 7 and, respectively, in Figures 5 and 7, the selecting means 23 comprise a plate 24 connected at the outfeed pipe 12, on which there is a first and a second nozzle 25, 26 each of which may be connected to the mixing chamber 6 in a corresponding dispensing condition.

In particular, the plate 24 is removably connected to the tap 11 below the tap, allowing dispensing of the ice cream or the ice cream shake through the nozzles 25, 26.

In more detail, it should be noticed that at the bottom of the tap 11 there is a hollow base wall 27, closing the mixing chamber 6 and forming the above-mentioned pipe 12. The plate 24 has a portion 28 pivoting below the wall 27 by means of a pin 28a projecting from the wall 27 and adjacent to the pipe 12.

In this way, the plate 24 is able to move between a first position corresponding to the ice cream dispensing condition in which the first nozzle 25 is in fluid communication with the outfeed pipe 12 (Figures 4 and 6), and a second position corresponding to the ice cream shake dispensing condition in which the second nozzle 26 is in fluid communication with the outfeed pipe 12 (Figures 5 and 7).

The plate 24 also has an extended grip portion 29 projecting beyond the volumetric dimensions of the tap 11 to allow manual movement of the plate 24 between the first and the second positions.

The plate 24 also has a curved cavity 30 positioned on the opposite side to the grip portion 29. Extending inside the cavity 30 there is a pin 31 projecting from the wall 27 and able to slide in the cavity 30.

In this way, acting on the grip portion 29 it is possible to rotate the plate 24 about the pin 28a to make the cavity 30 slide on the respective pin 31. In this situation it should be noticed that the curved cavity 30 extends in a substantially semicircular shape, having at its centre the pin 28a on which the plate 24 pivots.

It should also be noticed that the rotation of the plate 24 between the first and the second positions occurs in a respective horizontal plane in which the plate 24 lies, forming a curved path "P" on which the first and second nozzles 25, 26 are positioned.

In particular, each nozzle 25, 26 consists of an opening 25a, 26a for the passage of the product, made between the pivoting portion 28 and the curved cavity 30, on the path "P" which is parallel with the extension of the cavity 30. The opening 25a for the passage of the product of the first nozzle 25 is larger than the opening 26a for the passage of the product of the second nozzle 26, and has a substantially irregular shape forming a "star-shaped" outline suitable for giving a particular appearance to the ice cream forced out through the first nozzle 25. In contrast, the opening 26a for the passage of the product of the second nozzle 26 has a circular shape, suitable for dispensing a liquid product such as an ice cream shake.

The selecting means 23 also comprise a control element 32 operatively connected to the circuits 5, 16, 20 and to the plate 24 for controlling the dispensing of ice cream or of ice cream shake depending on the positioning of the plate 24.

In particular, the control element 32 comprises an electronic control unit 33 schematically illustrated in Figure 2 and operatively connected to the pump 19 of the auxiliary processing circuit 16, the heating element 18, the movement means 10, the pumps 22 of the syrup feed circuits 20 and the dispensing means 13.

The control element 32 also comprises a sensor 34 connected to the control unit 33 and positioned at the tap 11 for detecting the positioning of the plate 24. Advantageously, the sensor 34 is of the magnetic type and is coupled with the plate 24 for detecting the positions of the plate 24 and consequently for sending corresponding signals to the control unit 33 through respective transmission means 35.

In more detail, when the plate 24 is in the first position, the transmission means 35 send the control unit 33 a first signal S1 for activating the stirrer 9 movement means 10. When the plate 24 is in the second position, the transmission means 35 send the control unit 33 a second signal S2 for activating the stirrer 9 movement means 10, the pump 19 of the auxiliary processing circuit 16 and the heating element 18.

In this way, the electronic control unit 33 controls the supply of only the product to be processed or of the product to be processed plus the diluting liquid depending on the positioning of the plate 24. Advantageously, when the plate 24 is in the first position, only the product to be processed for making ice cream is supplied to the mixing chamber 6. Alternatively, if the plate 24 is in the second position, both the product to be processed and the diluting liquid for making the ice cream shake are supplied to the mixing chamber 6.

The control element 32 also comprises a device 36 for selecting the flavouring syrup, operatively connected to the electronic control unit 33 for enabling/disabling the pumps 22 of the syrup feed circuits 20.

In particular, the selecting device 36 has a control panel (schematically illustrated) for selecting the type of syrup to be supplied to the mixing chamber 6 corresponding to a particular flavour to be given to the ice cream or the ice cream shake.

In this way, the products dispensed by the machine 1 may be neutral or flavoured with syrups having different flavours.

In practice, when an ice cream is to be dispensed, the plate 24 is manually positioned in the respective first position in which the first nozzle 25 is in fluid communication with the outfeed pipe 12.

The sensor 34 detects the positioning of the plate 24 and sends the signal S1 to the electronic control unit 33 which activates the stirrer 9 movement means 10. In this way the product contained in the tank 3 is supplied through the freezing chamber 4 into the mixing chamber 6. Moreover, by acting on the selecting device 36 it is possible to feed a syrup into the mixing chamber 6. In other words, after the command sent by the selecting device 36, the control unit 33 also activates a pump 22 corresponding to the feed circuit of a predetermined syrup.

The mixing element 14 mixes the ice cream with the syrup in the chamber 6, and the actuator 15 allows the ice cream to reach and pass through the outfeed pipe 12.

In this situation, it should be noticed that the dispensing means 13 may be activated directly by the control unit 33 after a predetermined signal. Alternatively, the dispensing means 13 may be activated manually by the operator.

The ice cream passes through the outfeed pipe 12 and is forced out through the first nozzle 25, suitable for dispensing that specific product.

When the ice cream shake is to be dispensed, the plate 24 is rotated to the second position in which the second nozzle 26 is in fluid communication with the outfeed pipe 12.

In this situation the sensor 34 sends the second signal S2 to activate not just the stirrer 9 movement means 10 but also the pump 19 of the auxiliary processing circuit 16. In this way, the product to be processed contained in the tank 3 and the diluting liquid housed in the tank 17 are supplied to the mixing chamber 6. Advantageously, the control unit 33 also activates the heating element 18 to heat the diluting liquid and obtain an ice cream shake which is much less dense than the ice cream.

The mixing element 14 then mixes the product to be processed with the diluting liquid and with any syrup present to make the ice cream shake which is forced out of the second nozzle 26.

Advantageously, it should be noticed that the machine 1 allows the dispensing of ice cream and ice cream shake by adapting the dispensing nozzle according to the specific product.

The ice cream is forced out through the first nozzle 25 which has a larger opening and an irregular outline to give the ice cream an attractive shape. In contrast, the ice cream shake is forced out of the second nozzle 26 which is much smaller and has a circular outline to keep the flow of shake compact and avoid any turbulence in the flow.

As shown in Figure 3, like the machines 1 illustrated in Figures 1 and 2, the machine 1 comprises, again supported by the frame 2 in a single integrated structure, a plurality of tanks 38 which can be used for containing additional condiments, in particular candied items, sweets, chocolates, hazelnuts, pistachios, etc., and a mixer 39 equipped with a disposable spoon 40 for mixing the additional condiments with the product dispensed.

Again in this case the mixer 39 is positioned immediately next to, specifically to the right of, the dispensing means 13 and the tanks 38 are positioned immediately below the dispensing means 13 and the mixer 39.

According to alternative embodiments not illustrated, the mixer 39 is positioned immediately to the left of the dispensing means 13, or the tanks 38 are positioned immediately below only the dispensing means 13, or the tanks 38 are positioned immediately below only the mixer 39.

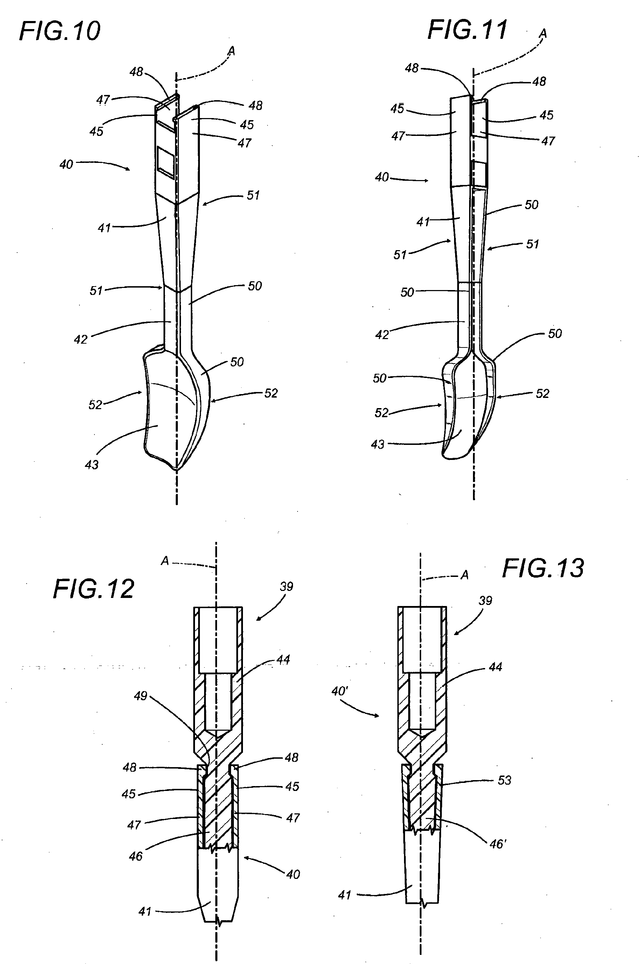

The mixer 39 comprises an electric motor and a relative electronic control section of the known type and therefore not described in detail. The spoon 40 is described below with reference to Figures 10 to 12.

The spoon 40, already described above, comprises the shank 41 which, at the opposite end to the blade-shaped mixing and scooping means 43, has two end jaws 45, designed to removably engage with a free end portion 46 of the shaft 44.

More precisely, the jaws 45 are formed by two respective rectangular flat walls 47, extending in the direction of the axis A, which are opposite and parallel with one another, each having at its free end a tooth 48, transversal to the axis A, for engaging with a transversal annular groove 49 in the above-mentioned free end portion 46 of the shaft 44 (Figure 12).

The walls 47 are positioned parallel with a spoon 40 plane of symmetry, passing through the axis A.

As Figure 11 more clearly shows, the spoon 40 comprises two longitudinal projections or ribs 50 projecting transversally from the shank 41 and from the blade-shaped mixing and scooping means 43, at a right angle towards the back of the spoon 40, at least partly following its contour. More precisely, each rib 50 extends in the form of a wing both along a respective side 51 of the shank 41 and, continuously, along a respective side 52 of the blade-shaped mixing and scooping means 43, and simultaneously acts as a stiffening element for the spoon 40 and as an active element, that is to say as a blade, in the mixing action.

The projections 50 give the shank 41, at an end portion of it adjacent to the blade-shaped mixing and scooping means 43, a channel shape, having a C-shaped cross-section.

According to alternative embodiments of the spoon 40, not illustrated, each longitudinal rib 50 extends only along the respective side 51, or only along the respective side 52.

According to another alternative embodiment, not illustrated, the spoon 40 has a single rib 50, positioned like one of the two ribs 50 described above, or centrally in a symmetrical position along the above-mentioned spoon 40 plane of symmetry.

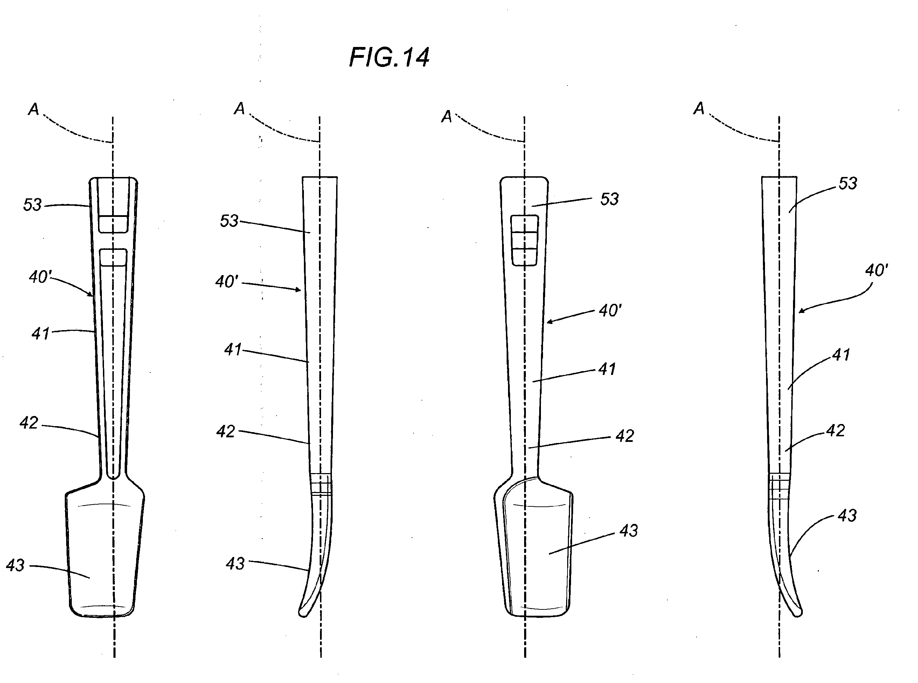

According to the alternative embodiment 40' illustrated in Figures 13 and 14, the blade-shaped mixing and scooping means 43 are asymmetrical relative to any plane passing through the axis A, since it is designed for use as a scoop exclusively with the right hand. Obviously, according to an alternative embodiment not illustrated, the above-mentioned asymmetry may be used for left-handed people.

Moreover, in the alternative embodiment 40', the projections 50 are only relative to the shank 41 and the latter has a conical shape, with the projections 50 converging with one another towards the blade-shaped mixing and scooping means 43. In particular, at the opposite end to the blade-shaped mixing and scooping means 43, the shank 41 has a substantially conical wall 53, designed to removably engage, in a snap-on fashion, with a substantially conical free end portion 46' of the mixer 39 rotary shaft 44.

Obviously, the spoon 40 or 40' described above guarantees satisfactory mixing of the products with very low shaft speeds of rotation, thus avoiding problems linked to operator safety and to breaking the bonds in the product which give it a whipped consistency.

Moreover, according to an embodiment not illustrated, the shank 41 and the blade-shaped mixing and scooping means 43 may be made as a solid body.

The invention described above fulfils the preset aims. The position and function of the mixer 39 are immediately obvious to the consumer. The consumer has easy access to the mixer 39 without having to move from the position in which he drew out the product and added condiments to it, thus minimising the possibility of dropping the additional condiments on the floor.

Moreover, the machine 1 as a whole is compact and functional.

The invention described above is susceptible of industrial application and may be modified and adapted in several ways without thereby departing from the scope of the inventive concept. Moreover, all details of the invention may be substituted by technically equivalent elements.

## Claims

1. A machine for making and dispensing food products such as ice creams, ice cream shakes, "soft" ice cream and the like, comprising a frame (2), and, supported by the frame (2), at least one tank (3) for containing a basic product to be processed and at least one processing circuit (5) for making the products to be dispensed starting with the basic product; the processing circuit (5) in turn comprising a least one processing chamber (37), fed by the tank (3), a stirrer (9), housed in the processing chamber (37), and a refrigerating unit for refrigerating the processing chamber (37); the machine (1) also comprising means (13) for dispensing doses of processed product, said dispensing means being connected to the processing chamber (37); the machine (1) being **characterised in that** it comprises, supported by the frame (2) in a single integrated structure, a mixer (39) equipped with a disposable spoon (40; 40') for mixing additional condiments with the product dispensed; the mixer (39) being positioned immediately next to the dispensing means (13); and **in that** it comprises tanks (38) positioned immediately below the dispensing means (13) and/or the mixer (39).

2. The machine according to claim 1, **characterised in that** it also comprises, supported by the frame in a single integrated structure, a plurality of tanks (38) for containing additional condiments, in particular candied items, sweets, chocolates, hazelnuts, pistachios and similar products for mixing with the product which comes out of the dispensing means.

3. The machine according to claim 1 or 2, **characterised in that** the disposable spoon (40; 40') comprises an extended shank (41), bearing, at one longitudinal end (42), blade-shaped mixing and scooping means (43), and the spoon can be removably fixed to the rotary shaft (44) of the mixer (39), so that the consumer can subsequently use the spoon (40; 40') as a utensil for consuming the product previously mixed.

4. The machine according to claim 3, **characterised in that** the disposable spoon (40; 40') comprises at least one longitudinal rib (50) projecting transversally from the shank (41) and/or from the blade-shaped mixing and scooping means (43); said rib (50) simultaneously acting as a spoon (40; 40') stiffening element and as an element which is active in the mixing action.

5. The machine according to claim 4, **characterised in that** the rib (50) extends in the form of a wing along one side (51, 52) of the shank (41) and/or of the blade-shaped mixing and scooping means (43).

6. The machine according to claim 4, **characterised in that** it comprises two projections (50), each extending in the form of a wing along a respective side (51, 52) of the shank (41) and/or of the blade-shaped mixing and scooping means (43).

7. The machine according to any of the claims from 4 to 6, **characterised in that** the rib (50) extends at a right angle from the shank (41) and/or from the blade-shaped mixing and scooping means (43), at least partly following its profile.

8. The machine according to any of the claims from 4 to 7, **characterised in that** the shank (41) has an end portion, adjacent to the blade-shaped mixing and scooping means (43), which has a "C"-shaped. cross-section.

9. The machine according to any of the claims from 4 to 8, **characterised in that** the blade-shaped mixing and scooping means (43) are asymmetrical relative to any plane passing through the central longitudinal axis (A) of the spoon (40').

10. The machine according to any of the claims from 4 to 9, **characterised in that** at the end opposite the blade-shaped mixing and scooping means (43), the shank (41) is equipped with two jaws (45) designed to removably engage with a free end portion (46) of the rotary shaft (44).

11. The machine according to claim 10, **characterised in that** the jaws (45) are shaped so as to engage with a transversal groove (49) in the free end portion (46).

12. The machine according to any of the claims from 4 to 9, **characterised in that** at the end opposite the blade-shaped mixing and scooping means (43), the shank (41) is equipped with a substantially conical wall (53) designed to removably engage in a snap-on fashion with a substantially conical free end portion (46') of the rotary shaft (44).

13. The machine according to any of the foregoing claims from 4 to 12, **characterised in that** the shank (41) and the blade-shaped mixing and scooping means (43) are made as a solid body.

14. The machine according to any of the foregoing claims from 1 to 13, **characterised in that** it comprises, for making two different types of product, respectively consisting of ice creams and ice cream shakes, an auxiliary processing circuit (16) for making the ice cream shake, having an infeed end (16a) connected to a tank (17) for containing a diluting liquid and an outfeed end (16b) connected to the processing chamber (37); and means (23) for selecting the type of product, there being the possibility of switching said selecting means between a condition for dispensing the ice cream and a condition for dispensing the ice cream shake.

15. The machine according to any of the foregoing claims from 1 to 14, **characterised in that** it comprises, for making different flavoured products, at least two feed circuits (20) for respective flavouring syrups, each having an infeed end (20a) connected to a tank (21) for containing the respective syrup and an outfeed end (20b) connected to the processing chamber (37); and means (36) for selecting the product flavour for selectively activating/disabling each feed circuit (20).

## Patentansprüche

1. Maschine zur Herstellung und Ausgabe von Nahrungsmittelprodukten, wie Speiseeis, Eis-Shakes, "Soft"-Eis und Ähnlichem, umfassend einen Rahmen (2) und mindestens einen vom Rahmen (2) gehaltenen Behälter (3) zur Aufnahme eines zu verarbeitenden Basisprodukts und mindestens einen Verarbeitungskreis (5) zur Herstellung der auszugebenden Produkte vom Basisprodukt ausgehend; wobei der Verarbeitungskreis (5) wiederum mindestens eine Verarbeitungskammer (37), die vom Behälter (3) gespeist wird, ein Rührwerk (9), das in der Verarbeitungskammer (37) untergebracht ist, und eine Kühleinheit zum Kühlen der Verarbeitungskammer (37) umfasst; wobei die Maschine (1) ferner Mittel (13) zur Ausgabe von Dosen des verarbeiteten Produkts umfasst, wobei die Ausgabemittel mit der Verarbeitungskammer (37) verbunden sind; wobei die Maschine (1) **dadurch gekennzeichnet ist, dass** sie einen vom Rahmen (2) in einer einzigen integrierten Struktur gehaltenen Mischer (39) umfasst, der mit einem Wegwerflöffel (40; 40') zum Mischen des ausgegebenen Produkts mit zusätzlichen Zutaten ausgestattet ist; wobei der Mischer (39) unmittelbar nach den Ausgabemitteln (13) positioniert ist; und dass sie Behälter (38) umfasst, die unmittelbar unter den Ausgabemitteln (13) und/oder dem Mischer (39) positioniert sind.

2. Maschine nach Anspruch 1, **dadurch gekennzeichnet, dass** sie ferner eine vom Rahmen in einer einzigen integrierten Struktur gehaltene Vielzahl von Behältern (38) zur Aufnahme zusätzlicher Zutaten umfasst, im Besonderen Kandiertes, Bonbons, Schokolade, Haselnüsse, Pistazien und ähnliche Produkte zum Vermischen mit dem Produkt, das aus den Ausgabemitteln herauskommt.

3. Maschine nach Anspruch 1 oder 2, **dadurch gekennzeichnet, dass** der Wegwerflöffel (40; 40') einen ausgedehnten Schaft (41) umfasst, der an einem longitudinalen Ende (42) schaufelförmige Misch- und Schöpfmittel (43) trägt, und der Löffel abnehmbar an der Drehwelle (44) des Mischers (39) fixiert sein kann, sodass der Konsument anschließend den Löffel (40; 40') als ein Werkzeug zum Konsumieren des zuvor gemischten Produktes verwenden kann.

4. Maschine nach Anspruch 3, **dadurch gekennzeichnet, dass** der Wegwerflöffel (40; 40') mindestens eine longitudinale Rippe (50) umfasst, die transversal vom Schaft (41) und/oder von den schaufelförmigen Misch-und Schöpfmitteln (43) vorkragt; wobei die Rippe (50) gleichzeitig als versteifendes Element des Löffels (40; 40') und als Element dient, das im Mischvorgang aktiv ist.

5. Maschine nach Anspruch 4, **dadurch gekennzeichnet, dass** sich die Rippe (50) in Form eines Flügels entlang einer Seite (51, 52) des Schafts (41) und/oder der schaufelförmigen Misch- und Schöpfmittel (43) ausdehnt.

6. Maschine nach Anspruch 4, **dadurch gekennzeichnet, dass** sie zwei Vorkragungen (50) umfasst, die sich jeweils in Form eines Flügels entlang einer entsprechenden Seite (51, 52) des Schafts (41) und/oder der schaufelförmigen Misch- und Schöpfmittel (43) ausdehnen.

7. Maschine nach einem der Ansprüche 4 bis 6, **dadurch gekennzeichnet, dass** sich die Rippe (50) in einem rechten Winkel vom Schaft (41) und/oder von den schaufelförmigen Misch- und Schöpfmitteln (43) erstreckt, zumindest teilweise ihrer Kontur folgend.

8. Maschine nach einem der Ansprüche 4 bis 7, **dadurch gekennzeichnet, dass** der Schaft (41) neben den schaufelförmigen Misch- und Schöpfmitteln (43) einen Endabschnitt aufweist, der einen "C"-förmigen Querschnitt aufweist.

9. Maschine nach einem der Ansprüche 4 bis 8, **dadurch gekennzeichnet, dass** die schaufelförmigen Misch- und Schöpfmittel (43) zu einer beliebigen Ebene, die durch die zentrale longitudinale Achse (A) des Löffels (40') verläuft, asymmetrisch sind.

10. Maschine nach einem der Ansprüche 4 bis 9, **dadurch gekennzeichnet, dass** am Ende entgegengesetzt zu den schaufelförmigen Misch- und Schöpfmitteln (43) der Schaft (41) mit zwei Backen (45) ausgestattet ist, die dazu konzipiert sind, abnehmbar in einen freien Endabschnitt (46) der Drehwelle (44) einzugreifen.

11. Maschine nach Anspruch 10, **dadurch gekennzeichnet, dass** die Backen (45) so geformt sind, dass sie in eine transversale Nut (49) im freien Endabschnitt (46) eingreifen.

12. Maschine nach einem der Ansprüche 4 bis 9, **dadurch gekennzeichnet, dass** am Ende entgegengesetzt zu den schaufelförmigen Misch- und Schöpfmitteln (43) der Schaft (41) mit einer im Wesentlichen konischen Wand (53) ausgestattet ist, die dazu konzipiert ist, abnehmbar auf einrastende Art und Weise in einen im Wesentlichen konischen, freien Endabschnitt (46') der Drehwelle (44) einzugreifen.

13. Maschine nach einem der vorangehenden Ansprüche 4 bis 12, **dadurch gekennzeichnet, dass** der Schaft (41) und die schaufelförmigen Misch- und Schöpfmittel (43) als ein Festkörper hergestellt sind.

14. Maschine nach einem der vorangehenden Ansprüche 1 bis 13, **dadurch gekennzeichnet, dass** sie zur Herstellung von zwei verschiedenen Produktarten, die aus Speiseeis beziehungsweise Eis-Shakes bestehen, einen zusätzlichen Verarbeitungskreis (16) zur Herstellung des Eis-Shakes, aufweisend ein mit einem Behälter (17) verbundenes Einspeiseende (16a) zur Aufnahme einer Verdünnungsflüssigkeit und ein mit der Verarbeitungskammer (37) verbundenes Ausspeiseende (16b); und Mittel (23) zur Auswahl der Produktart umfasst, wobei die Möglichkeit des Umschaltens der Auswahlmittel zwischen einem Zustand der Ausgabe des Speiseeises und einem Zustand der Ausgabe des Eis-Shakes besteht.

15. Maschine nach einem der vorangehenden Ansprüche 1 bis 14, **dadurch gekennzeichnet, dass** sie zur Herstellung von Produkten mit verschiedenen Aromen mindestens zwei Speisekreise (20) für entsprechende Aromasirups, jeweils aufweisend ein mit einem Behälter (21) verbundenes Einspeiseende (20a) zur Aufnahme des entsprechenden Sirups und ein mit der Verarbeitungskammer (37) verbundenes Ausspeiseende (20b); und Mittel (36) zur Auswahl des Produktaromas zur wahlweisen Aktivierung/Deaktivierung eines jeden Speisekreises (20) umfasst.

## Revendications

1. Machine pour la fabrication et la distribution de produits alimentaires tels que crèmes glacées, crèmes glacées frappées, crèmes glacées à l'italienne et produits analogues, comprenant un châssis (2), et, supporté par le châssis (2), au moins un réservoir (3) servant à contenir un produit de base à élaborer et au moins un circuit de traitement (5) destiné à la fabrication des produits à distribuer en commençant par le produit de base ; le circuit de traitement (5) comprenant à son tour au moins une chambre de traitement (37), alimentée par le réservoir (3), un agitateur (9), logé dans la chambre de traitement (37), et un groupe frigorifique servant à réfrigérer la chambre de traitement (37) ; la machine (1) comprenant de plus des moyens (13) servant à distribuer des doses de produit élaboré, lesdits moyens de distribution étant reliés à la chambre de traitement (37) ; la machine (1) étant **caractérisée en ce qu'**elle comprend, supporté par le châssis (2) dans une unique structure intégrée, un mélangeur (39) doté d'une cuillère jetable (40 ; 40') servant à mélanger des condiments supplémentaires au produit distribué ; le mélangeur (39) étant positionné immédiatement après les moyens de distribution (13) ; et **en ce qu'**elle comprend des réservoirs (38) positionnés immédiatement en-dessous des moyens de distribution (13) et/ou du mélangeur (39).

2. Machine selon la revendication 1, **caractérisée en ce qu'**elle comprend de plus, supportés par le châssis dans une structure intégrée unique, une pluralité de réservoirs (38) servant à contenir des condiments supplémentaires, en particulier des éléments confits, des sucreries, des chocolats, des noisettes, des pistaches et des produits similaires se mélangeant avec le produit provenant des moyens de distribution.

3. Machine selon les revendications 1 ou 2, **caractérisée en ce que** la cuillère jetable (40 ; 40') comprend un tige allongée (41), supportant, à une extrémité longitudinale (42), des moyens à la cuillère et servant à mélanger en forme de pale (43), et la cuillère peut être fixée de façon amovible à un arbre rotatif (44) du mélangeur (39), de sorte que le consommateur peut, par la suite, utiliser la cuillère (40 ; 40') comme un ustensile pour consommer la produit mélangé auparavant.

4. Machine selon la revendication 3, **caractérisée en ce que** la cuillère jetable (40 ; 40') comprend au moins une nervure longitudinale (50) dépassant transversalement à partir de la tige (41) et/ou à partir des moyens à la cuillère et servant à mélanger en forme de pale (43) ; ladite nervure (50) agissant simultanément comme un élément de renforcement de la cuillère (40 ; 40') et comme un élément étant actif dans l'action de mélanger.

5. Machine selon la revendication 4, **caractérisée en ce que** la nervure (50) se développe dans la forme d'un rebord le long d'un côté (51, 52) de la tige (41) et/ou des moyens à la cuillère et servant à mélanger en forme de pale (43).

6. Machine selon la revendication 4, **caractérisée en ce qu'**elle comprend deux saillies (50), chacune se développant dans la forme d'un rebord le long d'un côté respectif (51, 52) de la tige (41) et/ou des moyens à la cuillère et servant à mélanger en forme de pale (43).

7. Machine selon l'une quelconque des revendications de 4 à 6, **caractérisée en ce que** la nervure (50) se développe orthogonalement à partir de la tige (41) et/ou des moyens à la cuillère et servant à mélanger en forme de pale (43), en suivant au moins partiellement son contour.

8. Machine selon l'une quelconque des revendications de 4 à 7, **caractérisée en ce que** la tige (41) possède une portion terminale, adjacente aux moyens à la cuillère et servant à mélanger en forme de pale (43), ayant une section transversale en forme de « C ».

9. Machine selon l'une quelconque des revendications de 4 à 8, **caractérisée en ce que** les moyens à la cuillère et servant à mélanger en forme de pale (43) sont asymétriques par rapport à tout plan passant par l'axe longitudinal central (A) de la cuillère (40').

10. Machine selon l'une quelconque des revendications de 4 à 9, **caractérisée en ce qu'**à l'extrémité opposée des moyens à la cuillère et servant à mélanger en forme de pale (43), la tige (41) est dotée de deux mâchoires (45) conçues pour se mettre en prise de manière amovible avec une portion terminale libre (46) de l'arbre rotatif (44).

11. Machine selon la revendication 10, **caractérisée en ce que** les mâchoires (45) présentent une forme pouvant se mettre en prise avec une rainure transversale (49) dans la portion terminale libre (46).

12. Machine selon l'une quelconque des revendications de 4 à 9, **caractérisée en ce qu'**à l'extrémité opposée des moyens à la cuillère et servant à mélanger en forme de pale (43), la tige (41) est dotée d'une paroi substantiellement conique (53) conçue pour se mettre en prise de manière amovible d'une façon encliquetée avec une portion terminale libre substantiellement conique (46') de l'arbre rotatif (44).

13. Machine selon l'une quelconque des revendications précédentes de 4 à 12, **caractérisée en ce que** la tige (41) et les moyens à la cuillère et servant à mélanger en forme de pale (43) forment un corps plein.

14. Machine selon l'une quelconque des revendications de 1 à 13, **caractérisée en ce qu'**elle comprend, pour la fabrication de deux différents types de produit, consistant respectivement en des crèmes glacées et des crèmes glacées frappées, un circuit de traitement secondaire (16) pour fabriquer la crème glacée frappée, ayant une extrémité d'entrée (16a) reliée à un réservoir (17) servant à contenir un liquide dilué et une extrémité de sortie (16b) reliée à la chambre de traitement (37) ; et des moyens (23) servant à sélectionner le type de produit, lesdits moyens de sélection pouvant passer d'une condition de distribution de crème glacée à une condition de distribution de crème glacée frappée.

15. Machine selon l'une quelconque des revendications de 1 à 14, **caractérisée en ce qu'**elle comprend, pour fabriquer différents produits aromatisés, au moins deux circuits d'alimentation (20) destinés aux sirops aromatisés respectifs, chacun disposant d'une extrémité d'entrée (20a) reliée à un réservoir (21) servant à contenir le sirop correspondant et une extrémité de sortie (20b) reliée à la chambre de traitement (37) ; et des moyens (36) servant à sélectionner l'arôme du produit afin d'activer/désactiver de façon sélective chaque circuit d'alimentation (20).
